# EUROPÄISCHE PATENTSCHRIFT

(11) **EP 3 461 607 B1**
(45) Veröffentlichungstag und Bekanntmachung des Hinweises auf die Patenterteilung: **20.10.2021**
(21) Anmeldenummer: 18194810.0
(22) Anmeldetag: 17.09.2018
(51) Int. Cl.: B27B 27/04, B23D 47/04, B23Q 3/00, B27B 5/065

(54) **WERKSTÜCKBEARBEITUNGSANLAGE, SOWIE VERFAHREN ZUM BETREIBEN EINER WERKSTÜCKBEARBEITUNGSANLAGE**
WORKPIECE PROCESSING SYSTEM AND METHOD FOR OPERATING SAME
INSTALLATION D'USINAGE DE PIÈCE À USINER AINSI QUE PROCÉDÉ DE FONCTIONNEMENT D'UNE INSTALLATION D'USINAGE DE PIÈCE À USINER

(30) Priorität: 02.10.2017 DE 102017122868
(43) Veröffentlichungstag der Anmeldung: 03.04.2019
(73) Patentinhaber: HOMAG Plattenaufteiltechnik GmbH, 75365 Calw (DE)
(72) Erfinder: HARTMANN, Gerhard, 72224 Ebhausen-Rotfelden (DE)
(74) Vertreter: DREISS Patentanwälte PartG mbB

(56) Entgegenhaltungen:
- EP-A1- 0 292 635
- EP-A1- 2 832 507
- DE-A1-102009 017 970
- US-A- 3 738 403
- US-A- 4 637 288
- US-A1- 2008 210 069

## Beschreibung

Die Erfindung betrifft eine Werkstückbearbeitungsanlage sowie ein Verfahren zum Betreiben einer Werkstückbearbeitungsanlage nach den Oberbegriffen der nebengeordneten Patentansprüche.

Beispielsweise aus der EP 1 321 252 A2 ist es bekannt, bei einer als Plattenaufteilanlage ausgebildeten Werkstückbearbeitungsanlage eine Anschlagvorrichtung vorzusehen, durch die ein auf einem Auflagebereich liegendes aufzuteilendes plattenförmiges Werkstück zur Durchführung eines Trennschnittes an eine sich auf einem Maschinentisch quer zu einer Trennebene erstreckende stationäre seitliche Anlageeinrichtung anlegbar ist. Die Anschlagvorrichtung ist an einem Sägewagen angeordnet und umfasst ein vertikal ausfahrbares Schwert, welches an einem Seitenrand des Werkstücks angreift und das Werkstück gegen die seitliche Anlageeinrichtung drückt. Die seitliche Anlageeinrichtung wird oft als "Winkellineal" bezeichnet.

Die seitliche Anlageeinrichtung ist exakt orthogonal zu der Trennebene ausgerichtet. Indem das Werkstück mit seinem Seitenrand gegen die seitliche Anlageeinrichtung gedrückt wird, wird das Werkstück exakt gegenüber der Trennebene ausgerichtet. Jedoch können beim Aufteilen durch eine Freisetzung von Materialspannungen bogenförmig gekrümmte Streifen produziert werden. In einem solchen Fall kann der Streifen nicht über seine gesamte Länge an der seitlichen Anlageeinrichtung ausgerichtet werden, was beim Aufteilen zu einem Winkelfehler an den fertigen Werkstücken führen kann.

Die EP 0 292 635 A1 beschreibt eine Werkstückvorschubvorrichtung mit einem Spannelement. Die EP 2 832 507 A1 offenbart ein Verfahren zum Zersägen von Werkstücken mit einem seitlich verfahrbaren Vakuumgreifer. Die DE 10 2009 017 970 A1 zeigt eine Vorschubvorrichtung mit in seitlicher Richtung verfahrbaren Greifern. Die US 2008/0210069 A1 beschreibt eine Vorrichtung zum Verarbeiten von Brettern mit Rollen, die die Bretter gegen einen Anschlag beaufschlagen. Die US 3 738 403 betrifft eine Säge mit einer Einrichtung, welche ein Brett seitlich gegen einen Anschlag beaufschlagt. Das US 4 637 288 beschreibt eine Klemmeinrichtung, mit der ein Werkstück zur Seite hin beaufschlagt werden kann.

Die vorliegende Erfindung hat die Aufgabe, ein Verfahren bereitzustellen, welches eine exakte Ausrichtung von Werkstücken zuverlässig und preiswert ermöglicht, selbst wenn beispielsweise das Material relativ weich oder das Werkstück relativ dünn ist.

Diese Aufgabe wird durch eine Werkstückbearbeitungsanlage und ein Verfahren mit den Merkmalen der nebengeordneten Patentansprüche gelöst. Vorteilhafte Weiterbildungen sind in Unteransprüchen angegeben. Darüber hinaus finden sich weitere für die Erfindung wesentliche Merkmale in der nachfolgenden Beschreibung und in der Zeichnung. Dabei können diese Merkmale sowohl in Alleinstellung als auch in unterschiedlichen Kombinationen für die Erfindung wesentlich sein, ohne dass dies im Einzelfall nochmals explizit erwähnt werden wird.

Bei der erfindungsgemäßen Werkstückbearbeitungsanlage kann es sich beispielsweise um eine Plattenaufteilanlage handeln. Die Werkstückbearbeitungsanlage umfasst einen Auflagebereich zum Auflegen mindestens eines Werkstücks, wobei das auf dem Auflagebereich liegende Werkstück mindestens in einer Längsrichtung des Auflagebereichs bewegt werden kann. Der Auflagebereich kann beispielsweise an einem Auflagetisch ausgeführt sein, und kann insbesondere an einem Rollentisch oder einem Luftkissentisch ausgeführt sein. Vorteilhafterweise ist der Auflagebereich des Auflagetisches funktional an einem Zuführtisch und/oder einem Maschinentisch und/oder Entnahmetisch ausgeführt. Diese Tische sind meist unmittelbar benachbart zueinander angeordnet. Am oder im Maschinentisch ist üblicherweise eine Bearbeitungseinrichtung angeordnet, mit der das vom Zuführtisch zum Maschinentisch gelangende Werkstück bearbeitet werden kann. Auf dem Entnahmetisch erfolgt eine Handhabung der bearbeiteten Werkstücke und Streifen durch eine Bedienperson oder eine Handhabungsvorrichtung. Die Richtung, in der das auf dem Auflagebereich liegende Werkstück beispielsweise von einer Vorschubeinrichtung transportiert wird, definiert die oben erwähnte Längsrichtung des Auflagebereichs.

Zu der erfindungsgemäßen Werkstückbearbeitungsanlage gehört ferner eine bezogen auf die Längsrichtung seitliche Anlageeinrichtung, an der ein Seitenrand des auf dem Auflagebereich liegenden Werkstücks angelegt werden kann. Eine solche seitliche Anlageeinrichtung kann beispielsweise als ein Winkellineal ausgeführt sein, welches ein einstückiges gerades Teil umfassen kann, aber auch mehrere voneinander beabstandete Segmente umfassen kann. Eine solche seitliche Anlageeinrichtung dient dazu, ein auf dem Auflagebereich liegendes Werkstück exakt auszurichten, indem das Werkstück an diese seitliche Anlageeinrichtung angelegt wird.

Erfindungsgemäß wird vorgeschlagen, dass die Werkstückbearbeitungsanlage mindestens eine Greifeinrichtung umfasst, welche im Bereich eines bezogen auf die Längsrichtung seitlichen Rands des Auflagetisches angeordnet ist und welche einen seitlichen Randabschnitt des Werkstücks greifen kann, wobei die Greifeinrichtung eine Beaufschlagungseinrichtung aufweist, mittels der sie das Werkstück seitlich zu der Anlageeinrichtung hin beaufschlagen kann. Anders als beim Stand der Technik drückt die Greifeinrichtung nicht gegen den Seitenrand bzw. gegen die seitliche Kante eines Werkstücks, sondern ergreift einen seitlichen Randabschnitt des Werkstücks. Somit wird das Risiko von Beschädigungen an seitlichen Kanten eines Werkstücks deutlich reduziert.

Ein solches "Ergreifen" bedeutet, dass der Kontakt zwischen der Greifeinrichtung und dem Werkstück nicht an der Seitenfläche bzw. Kante des Werkstücks hergestellt wird, sondern an einer Oberseite und/oder einer Unterseite des Werkstücks. Dort steht üblicherweise eine viel größere Fläche zum Angreifen zur Verfügung, so dass mit einer vergleichsweise geringen Flächenpressung gearbeitet werden kann, wodurch das Risiko von Beschädigungen am Werkstück selbst dann, wenn das Werkstück aus einem vergleichsweise weichen Material hergestellt ist und/oder wenn das Werkstück selbst vergleichsweise dünn ist, verringert wird.

Mittels der Beaufschlagungseinrichtung können die Greifeinrichtung und mit der Greifeinrichtung auch das mit ihr verbundene Werkstück seitlich zu der Anlageeinrichtung hin beaufschlagt werden. Dies ist auch dann, wenn die Greifeinrichtung wie vorliegend an der Oberseite und/oder der Unterseite des Werkstücks angreift, möglich, da nur vergleichsweise geringe Kräfte erforderlich sind, um das Werkstück zu der Anlageeinrichtung hin zu beaufschlagen bzw. gegen die Anlageeinrichtung zu drücken. Dabei ist es natürlich vorteilhaft, wenn die Greifeinrichtung so ausgebildet ist, dass sie mit dem Werkstück in einem möglichst guten Reibschluss zusammenwirkt. Hierzu kann die Greifeinrichtung beispielsweise dort, wo sie das Werkstück unmittelbar kontaktiert, eine Gummierung oder Ähnliches aufweisen.

Insgesamt wird mit der erfindungsgemäßen Greifeinrichtung der Aufwand deutlich reduziert, wodurch Kosten gespart werden. Darüber hinaus arbeitet die erfindungsgemäße Greifeinrichtung relativ schnell, wodurch die Zykluszeit reduziert wird, also der Durchsatz von Werkstücken durch die Werkstückbearbeitungsanlage erhöht wird. Auch wird durch die erfindungsgemäße Greifeinrichtung ein sehr präzises Ausrichten des Werkstücks an der seitlichen Anlageeinrichtung ermöglicht. Darüber hinaus wird es durch die Ausgestaltung der Greifeinrichtung und deren Anordnung im Bereich eines seitlichen Randes des Auflagetisches erreicht, dass die sonstigen Komponenten der Werkstückbearbeitungsanlage im Wesentlichen unbeeinflusst bleiben können.

Zu der Erfindung gehört auch, dass die Greifeinrichtung eine Klemmeinrichtung mit mindestens zwei Klemmabschnitten aufweist, zwischen denen ein seitlicher Randabschnitt des Werkstücks verklemmt werden kann. Eine solche Klemmeinrichtung greift also sowohl an der Oberseite als auch an der Unterseite des Werkstücks im Bereich von dessen seitlichem Randabschnitt an. Dies ist eine technisch äußerst einfach zu realisierende Art von Greifeinrichtung, welche bei praktisch allen Arten und Formen von Werkstücken einsetzbar ist, und welche auch bei praktisch allen Arten von Oberflächen auf der Unterseite und der Oberseite des Werkstücks einsetzbar ist. Die erfindungsgemäße Greifeinrichtung funktioniert dabei unabhängig von der Größe des Werkstücks ähnlich wie eine menschliche Hand.

Grundsätzlich denkbar wäre aber auch, dass die Greifeinrichtung beispielsweise in Form eines Vakuumsauggreifers ausgebildet ist. Eine solche Greifeinrichtung könnte beispielsweise nur auf der Oberseite oder auf der Unterseite angreifen. Sie würde jedoch nur bei entsprechend ausgebildeten Oberflächen funktionieren.

Dadurch, dass die Greifeinrichtung im Bereich der seitlichen Anlageeinrichtung angeordnet ist, drückt die Greifeinrichtung das Werkstück nicht gegen die seitliche Anlageeinrichtung, sondern zieht das Werkstück an die seitliche Anlageeinrichtung heran. Hierdurch wird das Risiko von Beschädigungen des Seitenrandes des auf dem Auflagebereich liegenden Werkstücks durch die Greifeinrichtung nochmals reduziert. Darüber hinaus wird hierdurch der übrige Aufbau der Werkstückbearbeitungsanlage besonders wenig beeinflusst, so dass gegebenenfalls sogar denkbar ist, dass die Greifeinrichtung bei bestehenden Werkstückbearbeitungsanlagen nachgerüstet werden kann.

Besonders vorteilhaft ist es dabei, wenn mindestens ein in Betriebslage mit dem Werkstück verbundener Abschnitt der Greifeinrichtung um eine Achse, die senkrecht zu einer Auflageebene des Auflagebereichs verläuft, schwenkbar ist. Hierdurch wird der Tatsache Rechnung getragen, dass das Werkstück durch das Anlegen an die seitliche Anlegeeinrichtung insbesondere im Hinblick auf seine Winkellage ausgerichtet und dabei um eine im Allgemeinen vertikale Achse gedreht wird. Diese Drehbewegung wird durch die erfindungsgemäße Ausgestaltung erleichtert, insbesondere wird ein Verkanten verhindert, ohne dass hierdurch die Klemmung beeinträchtigt wird.

In eine ähnliche Richtung geht jene Weiterbildung, gemäß der mindestens ein in Betriebslage mit dem Werkstück verbundener Abschnitt der Greifeinrichtung in der Längsrichtung bewegbar ist.

Dabei ist es in den beiden vorgenannten Fällen besonders bevorzugt, wenn die Greifeinrichtung eine Vorspanneinrichtung aufweist, welche den schwenkbaren bzw. bewegbaren Abschnitt der Greifeinrichtung in einem Ruhezustand (in dem die Greifeinrichtung also kein Werkstück greift) in eine Mittellage beaufschlagt.

Vorgeschlagen wird auch, dass die Beaufschlagungseinrichtung einen Antrieb, beispielsweise einen Pneumatikzylinder oder einen Riemenantrieb, umfasst. Ein solcher Antrieb stellt eine ausreichende Kraft zur Verfügung, um auch ein großes und schweres Werkstück gegen die seitliche Anlageeinrichtung zu bewegen und dort sicher zu halten, und ist dabei vergleichsweise preiswert.

In Weiterbildung hierzu wird vorgeschlagen, dass die seitliche Anlageeinrichtung im Bereich der Greifeinrichtung eine Lücke aufweist, durch die die Greifeinrichtung in Richtung zum Auflagetisch hindurchtreten kann. Dies vereinfacht die Konstruktion der Greifeinrichtung.

Ein erfindungsgemäßes Verfahren zum Betreiben einer Werkstückbearbeitungsanlage, insbesondere einer Plattenaufteilanlage, zeichnet sich dadurch aus, dass es folgende Schritte umfasst:
a. Auflegen eines Werkstücks auf einen Auflagetisch;
b. Greifen eines bezogen auf eine Längsrichtung des Auflagetisches seitlichen Randabschnitts des Werkstücks mittels einer im Bereich der seitlichen Anlageeinrichtung angeordneten und entweder eine Klemmeinrichtung mit mindestens zwei Klemmabschnitten, zwischen denen der seitliche Randabschnitt des Werkstücks verklemmt werden kann, oder einen Vakuumsauggreifer aufweisenden Greifeinrichtung;
c. Beaufschlagen des Werkstücks mittels einer Beaufschlagungseinrichtung seitlich zu einer Anlageeinrichtung hin derart, dass die Greifeinrichtung das Werkstück an die seitliche Anlageeinrichtung heranzieht.

In Weiterbildung hierzu wird vorgeschlagen, dass das Verfahren ferner folgende Schritte umfasst:
d. Bewegen einer Spanneinrichtung einer Vorschubvorrichtung gegen einen in der Längsrichtung gesehen hinteren Rand des Werkstücks;
e. Verklemmen des hinteren Randes des Werkstücks zwischen Klemmbacken der Spanneinrichtung; und
f. Freigegeben des seitlichen Randabschnitts des Werkstücks von der Greifeinrichtung.

Auf diese Weise wird einerseits das Werkstück zuverlässig an der seitlichen Anlageeinrichtung ausgerichtet, und andererseits zuverlässig von der Spanneinrichtung der Vorschubvorrichtung gegriffen, wodurch das Werkstück zuverlässig ausgerichtet beispielsweise zu einem Bearbeitungsbereich der Werkstückbearbeitungsanlage von der Vorschubvorrichtung transportiert werden kann.

Nachfolgend wird eine Ausführungsform der Erfindung unter Bezugnahme auf die beigefügte Zeichnung beispielhaft erläutert. In der Zeichnung zeigen:
- Figur 1: eine Draufsicht auf eine Werkstückbearbeitungsanlage in Form einer Plattenaufteilanlage mit einem Auflagebereich, einer seitlich an dem Auflagebereich angeordneten Greifeinrichtung und einer seitlich an dem Auflagebereich angeordneten seitlichen Anlageeinrichtung; und
- Figur 2: eine perspektivische stark schematisierte Darstellung der Greifeinrichtung und der seitlichen Anlageeinrichtung von Figur 1.

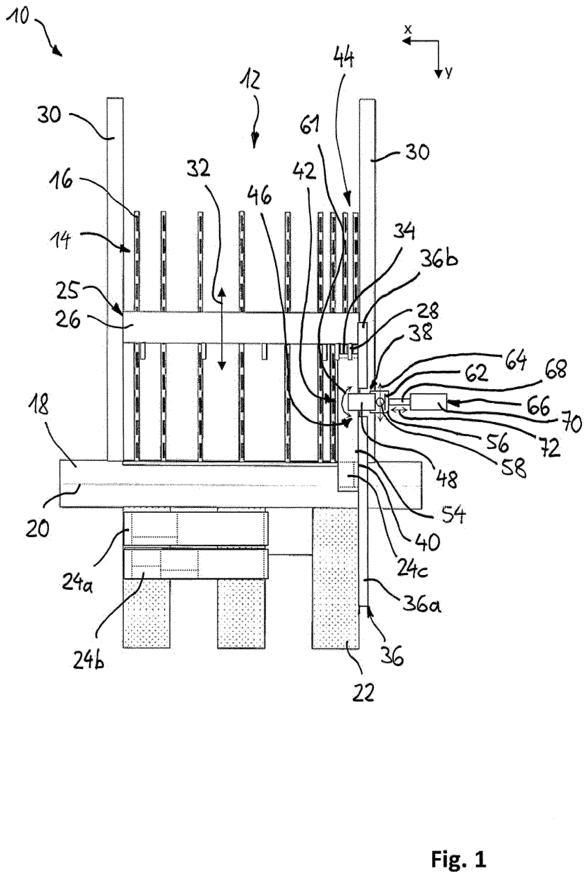

Eine Werkstückbearbeitungsanlage trägt in Figur 1 insgesamt das Bezugszeichen 10. Vorliegend handelt es sich beispielhaft bei der Werkstückbearbeitungsanlage um eine Plattenaufteilanlage, genauer gesagt um eine Plattenaufteilsäge.

Die Werkstückbearbeitungsanlage 10 umfasst zunächst einen Auflagebereich 12, der vorliegend drei Elemente umfasst: zunächst umfasst der Auflagebereich 12 einen Zuführtisch 14, der eine Mehrzahl von parallel zueinander angeordneten Rollenschienen 16 umfasst. Ferner umfasst der Auflagebereich 12 einen Maschinentisch 18, der zu dem Zuführtisch 14 unmittelbar benachbart angeordnet ist und einen Luftkissentisch umfasst. In dem Maschinentisch ist ein Sägespalt 20 vorhanden. Unterhalb von diesem wiederum ist ein nicht gezeichneter Sägewagen angeordnet, der eine Sägeeinrichtung trägt, die beispielsweise aus einer Hauptsäge und einem Vorritzer bestehen kann. Der Sägewagen ist längs zum Sägespalt 20 motorisch bewegbar.

Für einen Sägevorgang kann die Sägeeinrichtung motorisch nach oben bewegt werden, so dass sie durch den Sägespalt 20 nach oben über die Ebene des Maschinentisches 18 heraustritt und ein dort liegendes Werkstück aufteilen kann. Oberhalb von dem Maschinentisch 18 ist ein nicht gezeichneter Druckbalken vorhanden, der während eines Sägevorgangs zum Maschinentisch 18 hin motorisch, beispielsweise pneumatisch oder elektrisch, abgesenkt werden kann, wodurch ein auf dem Maschinentisch 18 liegendes Werkstück zwischen Maschinentisch 18 und Druckbalken verklemmt und hierdurch während eines Sägevorgangs sicher festgelegt wird.

Es versteht sich jedoch, dass es sich bei der Werkstückbearbeitungsanlage 10 auch um eine beinahe beliebige andere Werkstückbearbeitungsanlage handeln kann. Beispielsweise könnten für die Bearbeitung von Werkstücken auch eine Fräseinrichtung oder eine Bohreinrichtung eingesetzt werden.

Schließlich gehört zu dem Auflagebereich 12 auch noch ein Entnahmetisch 22, der vorliegend beispielhaft durch drei Segmente gebildet ist, von denen aus Gründen der Einfachheit nur das äußerste rechte Segment mit einem Bezugszeichen versehen ist. Der Entnahmetisch 22 ist zum Maschinentisch 18 unmittelbar benachbart angeordnet, und zwar auf der vom Zuführtisch 14 abgewandten Seite des Maschinentisches 18. Der Entnahmetisch 22 dient dazu, ein durch einen Sägevorgang abgetrenntes Teil-Werkstück zu entnehmen, zwischenzulagern und/oder wieder auf den Maschinentisch 18 und den Zuführtisch 14 zurück zu schieben.

Beispielhaft sind in Figur 1 zwei abgetrennte Streifen 24a und 24b gezeigt, die auf den in Figur 1 linken beiden Segmenten des Entnahmetisches 22 zwischengelagert sind. Darüber hinaus ist beispielhaft in Figur 1 ein abgetrennter Streifen 24c gezeigt, der vom Entnahmetisch 22 über den Maschinentisch 18 wieder zurück auf den Zuführtisch 14 geschoben wurde. Hierauf wird weiter unten noch stärker im Detail eingegangen werden.

Insgesamt ist der Auflagebereich 12 der Werkstückbearbeitungsanlage 10 also jener Bereich, in dem ein Werkstück zum Zuführen, Bearbeiten, Handhaben und/oder entnehmen aufgelegt bzw. vorhanden sein kann.

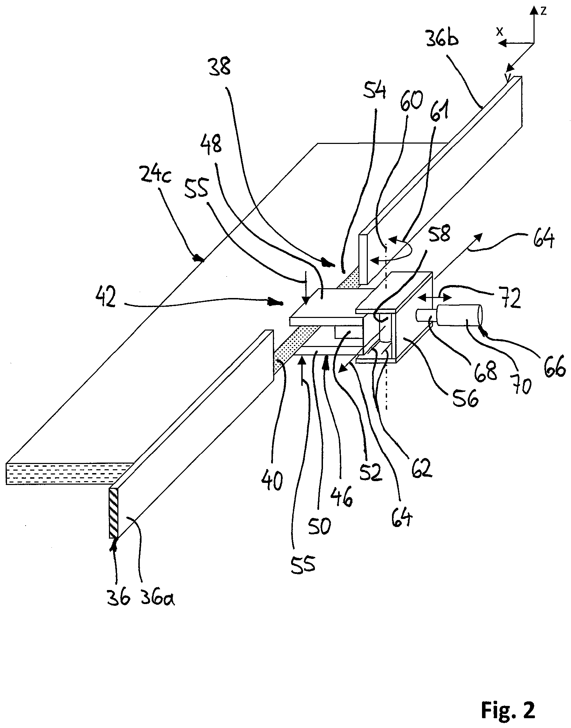

Zu der Werkstückbearbeitungsanlage 10 gehört auch eine Vorschubvorrichtung 25. Diese umfasst wiederum einen portalartigen Programmschieber 26, an dem eine Mehrzahl von in der Figur 1 nur symbolisch gezeichneten pneumatisch betätigbaren Spannzangen 28 angebracht ist. Die Spannzangen 28 bilden insoweit insgesamt eine Spanneinrichtung. Wiederum aus Gründen der Vereinfachung ist in Figur 1 nur eine der Spannzangen 28 mit einem Bezugszeichen versehen. Der Programmschieber 26 ist auf Schienen 30, die sich seitlich vom Zuführtisch 14 erstrecken, motorisch verfahrbar gelagert. Auf diese Weise kann ein auf dem Zuführtisch 14 und/oder dem Maschinentisch 18 liegendes Werkstück, vorliegend beispielhaft das Werkstück 24c, längs zu einer Vorschubrichtung, die in Figur 1 durch einen Doppelpfeil 32 angedeutet ist, bewegt werden. Dieser Doppelpfeil 32 definiert insoweit auch eine Längsrichtung des Auflagebereichs 12, die parallel ist zu einer y-Richtung entsprechend dem in den Figuren 1 und 2 eingezeichneten Koordinatensystem.

Für eine Bewegung des Werkstücks greift eine Spannzange 28 oder greifen mehrere Spannzangen 28 an einem vom Maschinentisch 18 aus gesehen hinteren Rand 34 des Werkstücks 24c an, so dass der hintere Rand 34 des Werkstücks 24c zwischen Klemmbacken (nicht gezeigt) der Spannzangen 28 verklemmt ist. Anschließend wird der Programmschieber 26 in Bewegung gesetzt, so dass das Werkstück 24c längs des Doppelpfeils 32 entweder zum Maschinentisch 18 hin oder von diesem weg bewegt werden kann.

Bezogen auf die Längsrichtung 32 des Auflagebereichs 12 unmittelbar seitlich von dem Auflagebereich 12 ist eine seitliche Anlageeinrichtung 36 angeordnet, die vorliegend ein zwei Segmente 36a und 36b umfassendes Winkellineal umfasst. Zwischen den beiden Segmenten 36a und 36b ist eine Lücke 38 vorhanden. Bei einer anders ausgebildeten seitlichen Anlageeinrichtung könnte an dieser Stelle auch eine Öffnung oder eine Ausnehmung oder Ähnliches vorhanden sein. Die Anlageeinrichtung 36 ist exakt orthogonal zum Sägespalt 20 ausgerichtet. An ihr kann ein Seitenrand 40 eines auf dem Auflagebereich 12 liegenden Werkstücks, vorliegend beispielhaft des Werkstücks 24c, angelegt werden. Hierdurch wird das Werkstück 24c exakt orthogonal zum Sägespalt 20 ausgerichtet.

Die Werkstückbearbeitungsanlage 10 weist ferner eine Greifeinrichtung 42 auf, deren Komponenten und Funktionen nun unter Bezugnahme auf Figur 1, zusätzlich aber auch unter Bezugnahme auf Figur 2 erläutert werden wird.

Die Greifeinrichtung 42 ist insgesamt im Bereich eines bezogen auf die Längsrichtung 32 seitlichen Rands 44 des Auflagebereichs 12 angeordnet, und zwar im Bereich der seitlichen Anlageeinrichtung 36, nämlich im Bereich der Lücke 38 zwischen den beiden Segmenten 36a und 36b. Sie weist eine Klemmeinrichtung 46 mit einem oberen Klemmabschnitt 48 und 50 auf. Die beiden Klemmabschnitte 48 und 50 können über eine in Figur 2 nur symbolisch dargestellte pneumatische Betätigungseinrichtung 52 aufeinander zu bewegt werden, so dass zwischen ihnen ein seitlicher Randabschnitt 54 eines Werkstücks, vorliegend beispielhaft des Werkstücks 24c, verklemmt werden kann, wodurch die Klemmeinrichtung 46 in Betriebslage mit dem Werkstück 24c verbunden ist. Die Klemmbewegung der beiden Klemmabschnitte 48 und 50 ist in Figur 2 durch zwei Pfeile 55 angedeutet. Um einen möglichst guten Reibschluss zwischen den beiden Klemmabschnitten 48 und 50 einerseits und der Oberseite bzw. der Unterseite des Werkstücks 24c andererseits zu erreichen, können die beiden Klemmabschnitte 48 und 50 auf ihrer dem Werkstück 24c zugewandten Seite beispielsweise mit einer Gummierung oder ähnlichem versehen sein.

Die Greifeinrichtung 42 umfasst ferner einen Basisabschnitt 56. Die Klemmeinrichtung 46 ist mit dem Basisabschnitt 56 über ein nur symbolisch gezeichnetes Drehgelenk 58 verbunden, welches eine vertikale und insoweit parallel zu einer z-Richtung verlaufenden Drehachse 60 aufweist (Figur 2). Auf diese Weise ist die Klemmeinrichtung 46 relativ zum Basisabschnitt 56 schwenkbar um die vertikale Achse 60, die senkrecht zu einer Auflageebene (ohne Bezugszeichen) des Auflagebereichs 12 verläuft, gehalten. Die mögliche Schwenkbewegung um die vertikale Achse 60 ist in den Figuren durch einen Doppelpfeil 61 angedeutet.

Das Drehgelenk 58 ist wiederum am Basisabschnitt 56 mittels zweier Linearlager translatorisch bewegbar gehalten, wobei die mögliche Bewegungsrichtung parallel zu der Längsrichtung 32 verläuft. In Figur 2 ist ein unteres Linearlager symbolisch durch zwei Striche angedeutet, welche das Bezugszeichen 62 tragen. Insgesamt ist auf diese Weise die in Betriebslage mit dem Werkstück 24c verbundene Klemmeinrichtung 46, die einen Abschnitt der Greifeinrichtung 42 darstellt, gegenüber dem Basisabschnitt 56 in der Längsrichtung 32 (also parallel zu der y-Richtung) bewegbar. Dies ist in Figur 2 durch Pfeile 64 angedeutet. Diese Bewegung der Klemmeinrichtung 46 in Richtung 64 kann durch einen (nicht gezeigten) Sensor erfasst werden, wodurch ein Kontakt des geklemmten Werkstücks mit einem Basisabschnitt der Spannzangen 28 ("Spannzangengrund") detektiert werden kann.

Die Greifeinrichtung 42 weist optional eine in der Zeichnung nicht dargestellte Vorspanneinrichtung auf, welche die Klemmeinrichtung 46 relativ zum Basisabschnitt 56 sowohl im Hinblick auf die Schwenkbewegung um die vertikale Achse 60 als auch im Hinblick auf die translatorische Bewegung längs des Linearlagers 62 in einem Ruhezustand, in dem die Greifeinrichtung 42 also kein Werkstück 24c gegriffen hat, in eine Mittellage beaufschlagt. Eine solche Mittellage ist beispielsweise dadurch gekennzeichnet, dass die Klemmeinrichtung 46 im Wesentlichen orthogonal zur Längsrichtung 32 und im Wesentlichen mittig in Bezug auf die Erstreckung der Lücke 38 ausgerichtet ist. Bei der Vorspanneinrichtung kann es sich im einfachsten Fall um eine Federeinrichtung handeln.

Zu der Greifeinrichtung 42 gehört auch eine Beaufschlagungseinrichtung 66, welche vorliegend einen Pneumatikzylinder mit einer Kolbenstange 66 und einem Zylindergehäuse 68 umfasst. Der Basisabschnitt 56 ist vorliegend starr mit der Kolbenstange 66 verbunden. Auf diese Weise können der Basisabschnitt 56 und die mit diesem verbundene Klemmeinrichtung 46 entsprechend dem Doppelpfeil 72 in einer horizontalen Ebene und quer zur Längsrichtung 32 bewegt werden, also parallel zu einer x-Richtung.

Mittels einer solchen Bewegung kann also die Greifeinrichtung 42 durch die Lücke 38 der seitlichen Anlageeinrichtung 36 in Richtung zum Auflagebereich 12 hindurchtreten, aber auch durch diese Lücke 38 vom Auflagebereich 12 zurückgezogen werden.

Die Werkstückbearbeitungsanlage 10 kann beispielhaft folgendermaßen betrieben werden: Zunächst wird eine großformatige Platte auf den Zuführtisch 14 aufgelegt, an der seitlichen Anlageeinrichtung 36 angelegt und ausgerichtet, an einem hinteren Rand von den Spannzangen 28 gegriffen und mittels des Programmschiebers 26 dem Maschinentisch 18 bzw. dem Sägespalt 20 zugeführt. Auf diese Weise wird die großformatige Platte in die drei in Figur 1 gezeigten streifenförmigen Werkstücke 24a-c aufgeteilt. Dabei ist es vorliegend sogar möglich, dass bei der Aufteilung der großformatigen Platte die produzierten streifenförmigen Werkstücke 24a-c durch freigesetzte Spannungen im Material eine bogenförmige Seite am Seitenrand 40 haben.

Während die Werkstücke 24a und 24b zunächst auf dem Entnahmetisch 22 zwischengelagert bleiben, wird von einer Bedienperson oder einer automatischen Handhabungsvorrichtung, beispielsweise einem Roboter, das Werkstück 24c über das in Figur 1 äußerste rechte Segment des Entnahmetisches 22 zunächst auf den Maschinentisch 18 und dann weiter auf den Zuführtisch 14 geschoben bzw. gelegt. Insoweit wird dieses Werkstück 24c also auf den Auflagebereich 12 aufgelegt.

Nun werden von einer nicht gezeigten Steuer- und Regeleinrichtung die Beaufschlagungseinrichtung 66 und die Betätigungseinrichtung 52 angesteuert. Die Betätigungseinrichtung 52 wird dabei so angesteuert, dass sich die beiden Klemmabschnitte 48 und 50 der Klemmeinrichtung 46 voneinander weg bewegen. Die Beaufschlagungseinrichtung 66 wird so angesteuert, dass die Klemmeinrichtung 46 aus einer Ruheposition, in der sie seitlich außerhalb vom Auflagebereich 12 angeordnet ist, durch die Lücke 38 zwischen den beiden Segmenten 36a und 36b der seitlichen Anlageeinrichtung 36 hindurch in Richtung zum Auflagebereich 12 bewegt wird, also in x-Richtung. Zusätzlich kann der Programmschieber 26 das Werkstück 24c bis in eine vorgegebene (vorab berechnete) Ausrichtposition bewegen. Die Spannzangen 28 können dann geöffnet und in eine sogenannte "Ausweichposition" bewegt werden, damit sich das Werkstück 24 c beim Ausrichten frei bewegen kann.

Sobald die Klemmeinrichtung 46 im Bereich des seitlichen Randabschnitts 54 des Werkstücks 24c ist, wird die Betätigungseinrichtung 52 so angesteuert, dass die beiden Klemmabschnitte 48 und 50 aufeinander zubewegt werden. Hierdurch kommen die beiden Klemmabschnitte 48 bzw. 50 an der Oberseite bzw. der Unterseite des Werkstücks 24c in Anlage, und wird das Werkstück 24c zwischen den beiden Klemmabschnitten 48 und 50 der Klemmeinrichtung 46 verklemmt. Mit anderen Worten: der bezogen auf die Längsrichtung 32 des Auflagebereichs 12 seitlicher Randabschnitt 54 des Werkstücks 24c wird mittels der Greifeinrichtung 42 gegriffen.

Nun wird die Beaufschlagungseinrichtung 66 so angesteuert, dass die Klemmeinrichtung 46 wieder vom Auflagebereich 12 zumindest ein kurzes Stück entgegen der x-Richtung zurückgezogen wird, in den Figuren 1 und 2 also nach rechts. Hierdurch wird auch das Werkstück 24c zu der Anlageeinrichtung 36 hin bewegt, und kommt mit seinem Seitenrand 40 so in Anlage an die Anlageeinrichtung 36, dass der Seitenrand 40 vollständig an der Anlageeinrichtung 36 anliegt, wie dies in den Figuren 1 und 2 dargestellt ist. Da an der Beaufschlagungseinrichtung 66 weiterhin der für eine Betätigung entgegen der x-Richtung erforderliche Pneumatikdruck anliegt, wird das Werkstück 24c weiterhin gegen die Anlageeinrichtung 36 gedrückt bzw. gezogen, also insoweit beaufschlagt.

Dies wird auch dadurch erleichtert, dass die Klemmeinrichtung 46 relativ zum Basisabschnitt 56 um die vertikale Achse 60 schwenkbar und längs des Linearlagers 62 bewegbar ist. Eine mögliche vorige Schrägstellung des Werkstücks 24c wird auf diese Weise korrigiert und das Werkstück 24c exakt an der seitlichen Anlageeinrichtung 36 angelegt und somit exakt auch zu dem Sägespalt 20 ausgerichtet.

Die Steuer- und Regeleinrichtung steuert nun den Programmschieber 26 so an, dass sich die geöffneten Spannzangen 28, vorliegend die in Figur 1 äußersten rechten beiden Spannzangen 28, zum hinteren Rand 34 des Werkstücks 24c hin, also in y-Richtung, bewegen, und zwar soweit, bis ein sogenannter und nicht gezeichneter "Spannzangengrund" in Anlage an den hinteren Rand 34 des Werkstücks 24c gelangt. Dies kann, wie bereits oben erwähnt wurde, durch einen (nicht gezeigten) Sensor erfasst werden, der eine Bewegung der Klemmeinrichtung 46 in der Richtung 64 detektiert. Insoweit wird also die durch die Spannzangen 28 gebildete Spanneinrichtung gegen den besagten Rand 34 bewegt. Nun werden die Spannzangen 28 so angesteuert, dass der hintere Rand 34 des Werkstücks 24c zwischen den nicht gezeigten Klemmbacken der Spannzangen 28 verklemmt wird.

Dann wird die Betätigungseinrichtung 52 der Klemmeinrichtung 46 der Greifeinrichtung 42 so angesteuert, dass sich die Klemmabschnitte 48 und 50 voneinander weg bewegen, wodurch der seitliche Randabschnitt 54 des Werkstücks 24c von der Greifeinrichtung 42 freigegeben wird. Die Klemmeinrichtung 46 wird nun durch eine entsprechende Ansteuerung der Beaufschlagungseinrichtung 66 vom Auflagebereich 12 in den Figuren 1 und 2 nach rechts entgegen der x-Richtung zurückgezogen, bis sie sich vollständig hinter der Anlageeinrichtung 36 in ihrer Ruheposition befindet.

Bei der weiteren Aufteilung wird der Streifen bzw. das Werkstück 24c durch eine nicht gezeigte Ausrichtvorrichtung am Sägewagen an der seitlichen Anlageeinrichtung 36 angedrückt und durch die Klemmeinrichtung 46 gegen die seitliche Anlageeinrichtung beaufschlagt, so dass auch bei einem bogenförmigen Streifen 24c dessen Rand 40 sicher an der Anlageeinrichtung 36 anliegt.

Ein typischer Ablauf umfasst folgende Schritte:
1. Der Streifen 24c wird durch den Programmschieber 26 auf der sogenannten Schnittposition positioniert.
2. Dabei wird geprüft ob der Streifen 24c noch im Bereich der Klemmeinrichtung 46 liegt.
3. Die Ausrichtvorrichtung am Sägewagen und die Klemmeinrichtung 46 richten den Streifen 24c an der seitlichen Anlageeinrichtung 36 aus.
4. Der (nicht gezeichnete) Druckbalken klemmt den Streifen 24c.
5. Die Ausrichtvorrichtung am Sägewagen fährt zurück, und das Werkstück wird aufgeteilt.
6. Der Druckbalken wird angehoben und die Klemmeinrichtung 46 lässt den Streifen 24c los.

Ferner kann wie folgt vorgegangen werden: zunächst wird ein Werkstücks 24c auf einen Auflagebereich 12 aufgelegt. Dann wird ein bezogen auf eine Längsrichtung 32 des Auflagebereichs 12 seitlicher Randabschnitt 54 des Werkstücks mittels einer Greifeinrichtung 42 gegriffen. Anschließend wird das Werkstück 24c mittels der Beaufschlagungseinrichtung 66 seitlich zu der Anlageeinrichtung 36 hin beaufschlagt. Darüber hinaus ist es möglich, dass die Spannzangen 28 der Vorschubvorrichtung 25 gegen den in der Längsrichtung 32 gesehen hinteren Rand 34 des Werkstücks 24c bewegt werden. Dann kann der hintere Rand 34 des Werkstücks 24c zwischen den Klemmbacken der Spanneinrichtung 28 verklemmt werden, und schließlich kann der seitliche Randabschnitt 54 des Werkstücks 24c von der Greifeinrichtung 42 freigegeben werden.

Es versteht sich, dass grundsätzlich die oben beschriebene Wergstückbearbeitungsanlage 10 mehrere Klemmeinrichtungen 46 aufweisen kann.

## Patentansprüche

1. Werkstückbearbeitungsanlage (10), insbesondere Plattenaufteilanlage, mit einem Auflagebereich (12) zum Auflegen mindestens eines Werkstücks (24c), wobei das auf dem Auflagebereich (12) liegende Werkstück (24c) mindestens in einer Längsrichtung (32) des Auflagebereichs (12) bewegt werden kann, und mit einer bezogen auf die Längsrichtung (32) seitlichen Anlageeinrichtung (36), an der ein Seitenrand (40) des auf dem Auflagebereich (12) liegenden Werkstücks (24c) angelegt werden kann, wobei die Werkstückbearbeitungsanlage (10) mindestens eine Greifeinrichtung (42) umfasst, welche im Bereich eines bezogen auf die Längsrichtung (32) seitlichen Rands (44) des Auflagebereichs (12) angeordnet ist und welche einen seitlichen Randabschnitt (54) des Werkstücks (24c) greifen kann, wobei die Greifeinrichtung (42) eine Beaufschlagungseinrichtung (66) aufweist, mittels der sie das Werkstück (24c) seitlich zu der Anlageeinrichtung (36) hin beaufschlagt, **dadurch gekennzeichnet, dass** die Greifeinrichtung (42) eine Klemmeinrichtung (46) mit mindestens zwei Klemmabschnitten (48, 50) aufweist, zwischen denen der seitliche Randabschnitt (54) des Werkstücks (24c) verklemmt werden kann, oder einen Vakuumsauggreifer aufweist, und dass die Greifeinrichtung (42) im Bereich der seitlichen Anlageeinrichtung (36) derart angeordnet ist, dass sie das Werkstück (24c) an die seitliche Anlageeinrichtung (36) heranzieht.

2. Werkstückbearbeitungsanlage (10) nach einem der vorhergehenden Ansprüche, **dadurch gekennzeichnet, dass** mindestens ein in Betriebslage mit dem Werkstück (24c) verbundener Abschnitt (46) der Greifeinrichtung (42) um eine Achse (60), die senkrecht zu einer Auflageebene des Auflagebereichs (12) verläuft, schwenkbar ist.

3. Werkstückbearbeitungsanlage (10) nach einem der vorhergehenden Ansprüche, **dadurch gekennzeichnet, dass** mindestens ein in Betriebslage mit dem Werkstück (24c) verbundener Abschnitt (46) der Greifeinrichtung (42) in der Längsrichtung (32) bewegbar ist.

4. Werkstückbearbeitungsanlage (10) nach einem der Ansprüche 2 oder 3, **dadurch gekennzeichnet, dass** die Greifeinrichtung (42) eine Vorspanneinrichtung aufweist, welche den schwenkbaren bzw. bewegbaren Abschnitt (46) der Greifeinrichtung (42) in einem Ruhezustand in eine Mittellage beaufschlagt.

5. Werkstückbearbeitungsanlage (10) nach einem der vorhergehenden Ansprüche, **dadurch gekennzeichnet, dass** die Beaufschlagungseinrichtung (66) einen Antrieb (68, 70) umfasst.

6. Werkstückbearbeitungsanlage (10) nach einem der vorhergehenden Ansprüche, **dadurch gekennzeichnet, dass** die seitliche Anlageeinrichtung (36) im Bereich der Greifeinrichtung (42) mindestens eine Lücke (38) aufweist, durch die die Greifeinrichtung (42) in Richtung zum Auflagebereich (12) hindurchtreten kann.

7. Verfahren zum Betreiben einer Werkstückbearbeitungsanlage (10), insbesondere einer Plattenaufteilanlage, **dadurch gekennzeichnet, dass** es folgende Schritte umfasst:
a. Auflegen eines Werkstücks (24c) auf einen Auflagebereich (12);
b. Greifen eines bezogen auf eine Längsrichtung (32) des Auflagebereichs (12) seitlichen Randabschnitts (54) des Werkstücks mittels einer im Bereich der seitlichen Anlageeinrichtung (36) angeordneten und entweder eine Klemmeinrichtung (46) mit mindestens zwei Klemmabschnitten (48, 50), zwischen denen der seitliche Randabschnitt (54) des Werkstücks (24c) verklemmt werden kann, oder einen Vakuumsauggreifer aufweisenden Greifeinrichtung (42);
c. Beaufschlagen des Werkstücks (24c) mittels einer Beaufschlagungseinrichtung (66) seitlich zu einer Anlageeinrichtung (36) hin derart, dass die Greifeinrichtung (42) das Werkstück (24c) an die seitliche Anlageeinrichtung (36) heranzieht.

8. Verfahren nach Anspruch 7, **dadurch gekennzeichnet, dass** es ferner folgende Schritte umfasst:
d. Bewegen einer Spanneinrichtung (28) einer Vorschubvorrichtung (25) gegen einen in der Längsrichtung (32) gesehen hinteren Rand (34) des Werkstücks (24c);
e. Verklemmen des hinteren Randes (34) des Werkstücks (24c) zwischen Klemmbacken der Spanneinrichtung (28); und
f. Freigegeben des seitlichen Randabschnitts (54) des Werkstücks (24c) von der Greifeinrichtung (42) .

## Claims

1. Workpiece processing system (10), in particular panel dividing system, comprising a placement region (12) for placing at least one workpiece (24c), wherein it is possible to move the workpiece (24c) lying on the placement region (12) at least in a longitudinal direction (32) of the placement region (12), and comprising a contact device (36) lateral in relation to the longitudinal direction (32), on which a side edge (40) of the workpiece (24c) lying on the placement region (12) can be brought in contact, wherein the workpiece processing system (10) comprises at least one gripping device (42) which is arranged in the region of an edge (44) of the placement region (12), which edge is lateral in relation to the longitudinal direction (32), and which gripping device can grip a lateral edge portion (54) of the workpiece (24c), wherein the gripping device (42) has an acting device (66) by means of which it acts upon the workpiece (24c) laterally towards the contact device (36), **characterized in that** the gripping device (42) has a clamping device (46) comprising at least two clamping portions (48, 50), between which the lateral edge portion (54) of the workpiece (24c) can be clamped, or a vacuum suction gripper, and **in that** the gripping device (42) is arranged in the region of the lateral contact device (36) so as to pull the workpiece (24c) towards the lateral contact device (36).

2. Workpiece processing system (10) according to any of the preceding claims, **characterized in that** at least one portion (46) of the gripping device (42) connected to the workpiece (24c) in the operating position is pivotable about an axis (60) which runs perpendicularly to a placement plane of the placement region (12).

3. Workpiece processing system (10) according to any of the preceding claims, **characterized in that** at least one portion (46) of the gripping device (42) connected to the workpiece (24c) in the operating position is movable in the longitudinal direction (32).

4. Workpiece processing system (10) according to either claim 2 or claim 3, **characterized in that** the gripping device (42) has a pretensioning device which acts upon the pivotable or movable portion (46) of the gripping device (42) into a central position when in an idle state.

5. Workpiece processing system (10) according to any of the preceding claims, **characterized in that** the acting device (66) comprises a drive (68, 70).

6. Workpiece processing system (10) according to any of the preceding claims, **characterized in that**, in the region of the gripping device (42), the lateral contact device (36) has at least one gap (38) through which the gripping device (42) can pass in the direction of the placement region (12).

7. Method for operating a workpiece processing system (10), in particular a panel dividing system, **characterized in that** it comprises the following steps:
a. placing a workpiece (24c) onto a placement region (12) ;
b. gripping an edge portion (54) of the workpiece which is lateral in relation to a longitudinal direction (32) of the placement region (12) by means of a gripping device (42) arranged in the region of the lateral contact device (36) and having either a clamping device (46) comprising at least two clamping portions (48, 50), between which the lateral edge portion (54) of the workpiece (24c) can be clamped, or a vacuum suction gripper;
c. acting upon the workpiece (24c) by means of an acting device (66) laterally towards a contact device (36) in such a way that the gripping device (42) pulls the workpiece (24c) towards the lateral contact device (36) .

8. Method according to claim 7, **characterized in that** it further comprises the following steps:
d. moving a tensioning device (28) of a feed apparatus (25) against a rear edge (34) of the workpiece (24c) as seen in the longitudinal direction (32);
e. clamping the rear edge (34) of the workpiece (24c) between clamping jaws of the tensioning device (28); and
f. detaching the lateral edge portion (54) of the workpiece (24c) from the gripping device (42).

## Revendications

1. Installation de traitement de pièces (10), en particulier installation à diviser des panneaux, avec une zone d'appui (12) pour placer au moins une pièce (24c), dans laquelle la pièce (24c) reposant sur la zone d'appui (12) peut être déplacée au moins dans une direction longitudinale (32) de la zone d'appui (12), et avec un dispositif d'appui (36) latéral par rapport à la direction longitudinale (32), contre lequel peut être appliqué un bord latéral (40) de la pièce (24c) reposant sur la zone d'appui (12), dans laquelle ladite installation de traitement de pièces (10) comprend au moins un dispositif de préhension (42) qui est disposé au niveau d'un bord latéral (44) de la zone d'appui (12), par rapport à la direction longitudinale (32), et qui peut saisir une section de bord latérale (54) de la pièce (24c), dans laquelle le dispositif de préhension (42) présente un dispositif de sollicitation (66) au moyen duquel il sollicite la pièce (24c) latéralement en direction du dispositif d'appui (36), **caractérisée par le fait que** le dispositif de préhension (42) comprend un dispositif de serrage (46) ayant au moins deux sections de serrage (48, 50) entre lesquelles peut être serrée la section de bord latérale (54) de la pièce (24c), ou comprend une ventouse à vide, et que le dispositif de préhension (42) est disposé au niveau du dispositif d'appui latéral (36) de telle sorte qu'il tire la pièce (24c) contre le dispositif d'appui latéral (36).

2. Installation de traitement de pièces (10) selon l'une quelconque des revendications précédentes, **caractérisée par le fait qu'**au moins une section (46) du dispositif de préhension (42) qui est reliée à la pièce (24c) en position de fonctionnement peut pivoter autour d'un axe (60) qui est perpendiculaire à un plan d'appui de la zone d'appui (12).

3. Installation de traitement de pièces (10) selon l'une quelconque des revendications précédentes, **caractérisée par le fait qu'**au moins une section (46) du dispositif de préhension (42) qui est reliée à la pièce (24c) en position de fonctionnement est déplaçable dans la direction longitudinale (32).

4. Installation de traitement de pièces (10) selon l'une quelconque des revendications 2 ou 3, **caractérisée par le fait que** le dispositif de préhension (42) comprend un dispositif de précontrainte qui sollicite la section (46) apte à pivoter ou bien déplaçable du dispositif de préhension (42) dans un état de repos vers une position centrale.

5. Installation de traitement de pièces (10) selon l'une quelconque des revendications précédentes, **caractérisée par le fait que** le dispositif de sollicitation (66) comprend un mécanisme d'entraînement (68, 70).

6. Installation de traitement de pièces (10) selon l'une quelconque des revendications précédentes, **caractérisée par le fait que** le dispositif d'appui latéral (36) présente au moins une lacune (38) au niveau du dispositif de préhension (42), que le dispositif de préhension (42) peut traverser en direction de la zone d'appui (12).

7. Procédé destiné à faire fonctionner une installation de traitement de pièces (10), en particulier une installation à diviser des panneaux, **caractérisé par le fait qu'**il comprend les étapes suivantes consistant à:
a. placer une pièce (24c) sur une zone d'appui (12);
b. saisir une section de bord (54) de la pièce, latérale par rapport à une direction longitudinale (32) de la zone d'appui (12), au moyen d'un dispositif de préhension (42) qui est disposé au niveau du dispositif d'appui latéral (36) et qui comprend soit un dispositif de serrage (36) ayant au moins deux sections de serrage (48, 50) entre lesquelles peut être serrée la section de bord latérale (54) de la pièce (24c), soit une ventouse à vide;
c. solliciter la pièce (24c) au moyen d'un dispositif de sollicitation (66) latéralement vers un dispositif d'appui (36) de telle sorte que le dispositif de préhension (42) tire la pièce (24c) contre le dispositif d'appui latéral (36) .

8. Procédé selon la revendication 7, **caractérisé par le fait qu'**il comprend en outre les étapes suivantes consistant à:
d. déplacer un dispositif de serrage (28) d'un dispositif d'avance (25) contre un bord arrière (34) de la pièce (24c), vu dans la direction longitudinale (32);
e. serrer le bord arrière (34) de la pièce (24c) entre des mâchoires de serrage du dispositif de serrage (28); et
f. libérer la section de bord latérale (54) de la pièce (24c) du dispositif de préhension (42).
